# EUROPEAN PATENT APPLICATION

(11) **EP 4 778 953 A1**
(43) Date of publication of application: **22.07.2026**
(21) Application number: 24908045.8
(22) Date of filing: 18.12.2024
(51) Int. Cl.: C08G 18/78, C08G 18/76, C08G 18/32, C08G 18/38

(54) **NOVEL COMPOUND, ISOCYANATE COMPOSITION COMPRISING SAME, AND POLYMERIZABLE COMPOSITION COMPRISING ISOCYANATE COMPOSITION**

(30) Priority: 20.12.2023 KR 20230187694; 17.12.2024 KR 20240189145
(71) Applicant: Hanwha Solutions Corporation, Jung-gu Seoul 04541 (KR)
(72) Inventor: SIM, Yujin, Daejeon 34128 (KR); WOO, Eun Ji, Daejeon 34128 (KR); KIM, Jiyeon, Daejeon 34128 (KR); KWON, Dowoo, Daejeon 34128 (KR); KIM, Jong Jin, Daejeon 34128 (KR); JUN, Sung Hae, Daejeon 34128 (KR)
(74) Representative: Berggren Oy
(86) International application number: PCT/KR2024/020557
(87) International publication number: WO 2025/135762

(57) **Abstract**

Provided are a novel compound, isocyanate composition comprising the same, and a polymerizable composition including the isocyanate composition. The isocyanate composition comprising the compound represented by the Chemical Formula 1 can be used in a polymerizable composition for producing an optical material. An optical material produced from the polymerizable composition comprising the isocyanate composition exhibits high transparency, excellent glass transition temperature, and improved impact resistance.

## Description

### [Technical Field]

### Cross-reference to Related Application

The present application is based on, and claims priority from, Korean Patent Application No. 10-2023-0187694, filed on December 20, 2023 and Korean Patent Application No. 10-2024-0189145, filed on December 17, 2024 the disclosure of which is hereby incorporated by reference herein in its entirety.

The present invention relates to a novel compound, isocyanate composition comprising the same, and a polymerizable composition including the isocyanate composition.

### [Background Art]

Isocyanate compounds such as xylylene diisocyanate (XDI), etc. are raw materials for poly(thio)urethane, which is used in advanced optical lenses and flexible displays.

The physical properties of isocyanate compounds affect the optical properties of poly(thio)urethane lenses, such as transparency, refractive index, etc. Accordingly, research and development on isocyanate compositions to obtain poly(thio)urethane lenses with excellent physical properties have been continuously conducted.

### [Disclosure]

### [Technical Problem]

There are provided a novel compound, isocyanate composition comprising the same, and a polymerizable composition including the isocyanate composition.

### [Technical Solution]

According to one embodiment of the present invention, there is provided a compound represented by the following Chemical Formula 1: 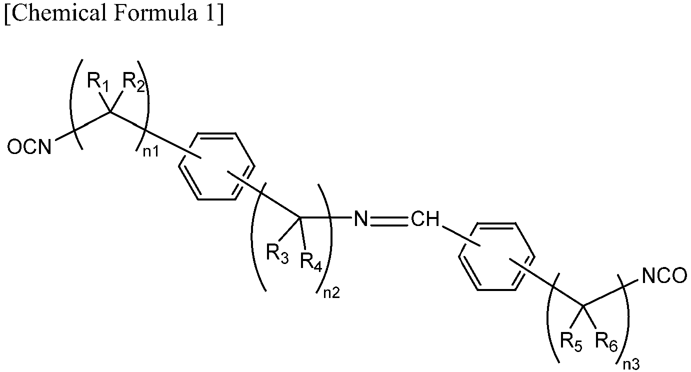
wherein in the Chemical Formula 1,
n1 to n3 are each independently an integer of 0 to 6,
R₁ to R₆ are each independently hydrogen, deuterium, tritium, or C₁₋₆ alkyl.

In one embodiment, n1 to n3 may each independently be an integer of 1 to 3.

In one embodiment, R₁ to R₆ may all be hydrogen.

In one embodiment, Chemical Formula 1 may be represented by the following Chemical Formula 1-1:

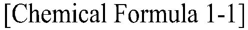

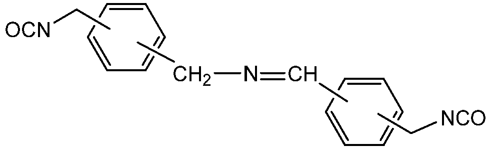

According to another embodiment of the present invention, there is provided an isocyanate composition including xylylene diisocyanate and the compound represented by the above Chemical Formula 1, wherein the content of the compound is more than 0 ppm to 1000 ppm or less.

In one embodiment, the content of the compound represented by Chemical Formula 1 in the isocyanate composition may be 0.1 ppm to 1000 ppm.

In one embodiment, the isocyanate composition may further include one or more selected from the group consisting of chloromethyl benzyl isocyanate, isocyanomethyl benzaldehyde, and isocyanomethyl benznitrile.

According to still another embodiment of the present invention, there is provided a polymerizable composition including the isocyanate composition; and polyol and/or polythiol component(s).

In one embodiment, the polyol and/or polythiol component(s) may include 2,3-bis(2-sulfanylethylsulfanyl)propane-1-thiol, 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane alone, or a mixture of two or more thereof.

The polymerizable composition may further include a polymerization initiator, an internal release agent, and a UV absorber.

According to still another embodiment of the present invention, there is provided an optical material including a polymer in which the polymerizable composition is polymerized.

### [Effect of the Invention]

A compound represented by Chemical Formula 1 can be added to an isocyanate composition to improve low-temperature stability. The isocyanate composition comprising the compound represented by the Chemical Formula 1 can be used in a polymerizable composition for producing an optical material. An optical material produced from the polymerizable composition comprising the isocyanate composition exhibits high transparency, excellent glass transition temperature, and improved impact resistance.

### [Best Mode for Carrying Out the Invention]

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

The present invention may be variously modified and have various forms, and specific exemplary embodiments are exemplified and explained in detail in the following description. However, it is not intended to limit the present invention to the specific exemplary embodiments, and it must be understood that the present invention includes every modifications, equivalents, or replacements included in the spirit and technical scope of the present invention.

Hereinafter, the present invention will be described in detail.

### Compound

There is provided a compound represented by the above Chemical Formula 1.

The compound represented by the Chemical Formula 1 may be included as an additive in an isocyanate composition including an isocyanate compound such as xylylene diisocyanate.

In a preferred embodiment, n1 to n3 may each independently be an integer from 1 to 3.

In a preferred embodiment, R₁ to R₆ may each independently be hydrogen, deuterium, tritium, of methyl.

In a preferred embodiment, R₁ to R₆ may be the same as each other.

In a preferred embodiment, R₁ to R₆ may all be hydrogen.

In a preferred embodiment, n1 to n3 may all be 1, and R₁ to R₆ may all be hydrogen. In such case, Chemical Formula 1 may be represented by the following Chemical Formula 1-1:

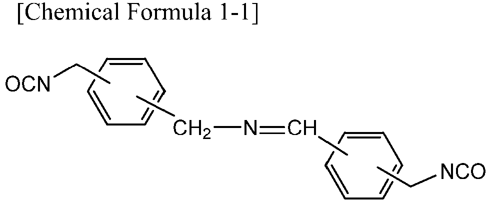

For example, the above Chemical Formula 1-1 may be represented by the following Chemical Formula 1-1-a:

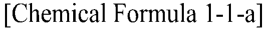

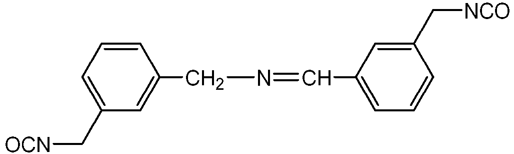

For example, the compound of Chemical Formula 1 can be prepared by the preparation method of Reaction Scheme 1 below. However, the preparation method of the compound represented by the Chemical Formula 1 is not limited to the following: 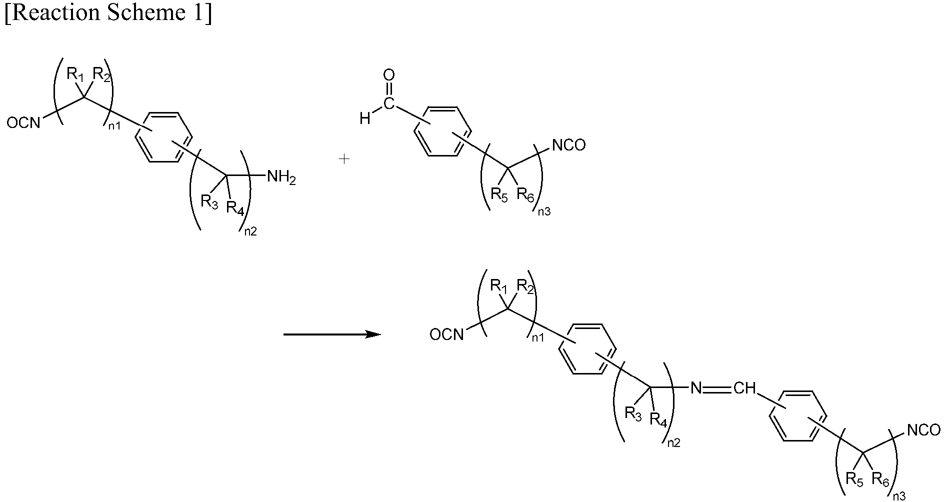 wherein in the Reaction Scheme 1, definitions of n1 to n3 and R₁ to R₆ are the same as defined in the Chemical Formula 1.

The reaction of the above Reaction Scheme 1 can be carried out under conditions for removing by-product water. For example, it can proceed using a Dean-Stark trap or by adding a dehydrating agent capable of removing water (e.g., MgSO₄, Na₂SO₄, molecular sieve, etc.).

### Isocyanate composition

An isocyanate composition of the present invention includes xylylene diisocyanate and the compound represented by the above Chemical Formula 1, and satisfies that the content of the compound represented by Chemical Formula 1 is more than 0 ppm to 1000 ppm or less.

Specifically, the xylylene diisocyanate may be one or more selected from the group consisting of 1,2-xylylene diisocyanate (o-xylylene diisocyanate, o-XDI), 1,3-xylylene diisocyanate (m-xylylene diisocyanate, m-XDI), and 1,4-xylylene diisocyanate (p-xylylene diisocyanate, p-XDI).

Preferably, the xylylene diisocyanate may be m-XDI.

The xylylene diisocyanate may be a commercially available product, or prepared by a preparation method including the steps of reacting xylylene diamine or a xylylene diamine salt with phosgene to obtain a reaction mixture, and purifying the reaction mixture by distillation. The xylylene diisocyanate preferably has a purity of 97.7 wt% or more, 98.0 wt% or more, 98.3 wt% or more, 99.0 wt% or more, or 99.2 wt% or more. The purity of the xylylene diisocyanate may be 100 wt%, or may be 99.9 wt% or less, or 99.8 wt% or less.

The content of xylylene diisocyanate in the isocyanate composition of the present invention may be 97.7 wt% or more, 98.0 wt% or more, 98.3 wt% or more, 99.0 wt% or more, or 99.2 wt% or more.

In one embodiment, the remainder of the isocyanate composition, excluding the compound represented by the chemical formula 1, may be xylylene diisocyanate. In another embodiment, the xylylene diisocyanate may be included in an amount of 99.9 wt% or less, or 99.8 wt% or less, of the isocyanate composition.

The isocyanate composition including the compound represented by Chemical Formula 1 as described above, while satisfying that the content thereof is more than 0 ppm to 1000 ppm or less, has low occurrence of white turbidity even when stored at low temperatures. In addition, poly(thio)urethane lenses manufactured using such an isocyanate composition exhibit high transparency, low yellowness and exhibits a high glass transition temperature (Tg) and improved impact resistance, and therefore, it may be suitably used as a high-quality optical material.

To secure these effects, the content of the compound of the Chemical Formula 1 in the isocyanate composition may satisfy 0.1 ppm or more, 0.2 ppm or more, 0.3 ppm or more, or 0.5 ppm or more, and 1000 ppm or less, 800 ppm or less, 500 ppm or less, or 300 ppm or less.

When the content of the compound in the isocyanate composition exceeds 1000 ppm, there are problems that the storage stability of the isocyanate composition deteriorates, and the yellowness and transparency of the poly(thio)urethane lenses deteriorate. In addition, the isocyanate composition having the content of the compound of less than 0.1 ppm may not exhibit the effects of improving the glass transition temperature and impact resistance when producing poly(thio)urethane.

Meanwhile, the isocyanate composition may further include one or more selected from the group consisting of chloromethyl benzyl isocyanate, isocyanomethyl benzaldehyde, and isocyanomethyl benznitrile, and the content thereof may be 0.01 part by weight to 0.5 parts by weight, based on 100 parts by weight of the isocyanate composition.

When the isocyanate composition further includes at least one additional substance selected from the group consisting of chloromethyl benzyl isocyanate, isocyanomethyl benzaldehyde, and isocyanomethyl benznitrile, the content of xylylene diisocyanate in the isocyanate composition may be the remainder excluding the additional substance and the compound of chemical formula 1.

### Polymerizable composition

The above-described isocyanate composition of the present invention may be used as a raw material for preparing poly(thio)urethane, and the poly(thio)urethane prepared in this manner exhibits improved impact resistance and excellent transparency.

According to one embodiment of the present invention, provided is a polymerizable composition including the isocyanate composition; and polyol and/or polythiol component(s).

The polymerizable composition has high transparency and excellent impact strength, thereby being suitably used as a high-quality optical material.

The description of the isocyanate composition included in the polymerizable composition is as described above.

The polyol included in the polymerizable composition is a compound having two or more hydroxyl groups, and compounds commonly used in the preparation of polyurethane may be used without limitation. For example, the polyol may include dihydric alcohols such as ethylene glycol, diethylene glycol, triethylene glycol, 1,2-propanediol, 1,3-propanediol, 1,2-butanediol, 2-methyl-2,3-butanediol, 1,6-hexanediol, 1,2-hexanediol, etc.; trihydric alcohols such as glycerol, trimethylolethane, trimethylolpropane (TMP), etc.; tetrahydric alcohols such as diglycerin, ditrimethylolpropane, pentaerythritol, dipentaerythritol, etc.; pentahydric alcohols such as L-arabinitol, ribitol, xylitol, etc.; hexahydric alcohols such as D-glucitol, D-mannitol, galactitol, etc.; heptahydric alcohols such as trehalose, etc.; octahydric alcohols such as sucrose, maltose, etc.; or low-molecular-weight polyols such as polyalkylene oxides having a number average molecular weight of 60 to 400.

Among them, diethylene glycol, glycerol, trimethylol ethane, trimethylol propane or a mixture thereof may be used, and more specifically, it may be preferable to use a trihydric alcohol such as glycerol, trimethylol propane, or trimethylol ethane alone, or to use a mixture of the trihydric alcohol and another polyol.

The above polythiol is a compound having two or more mercapto groups, and compounds used in the preparation of polythiourethane may be used without limitation. For example, aliphatic polythiols such as 2,3-bis(2-sulfanylethylsulfanyl)propane-1-thiol, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, etc. may be used alone or in a mixture of two or more thereof, but are not limited thereto.

Meanwhile, a molar ratio of the hydroxyl group (-OH) or mercapto group (-SH) to the isocyanate group (-NCO) in the polymerizable composition (i.e., a molar ratio of OH/NCO or SH/NCO) may be 0.5 or more, or 0.8 or more, and 3.0 or less, or 2.0 or less.

The polymerizable composition may further include compounds such as an internal release agent, a UV absorber, a polymerization initiator, a thermal stabilizer, a color compensator, a chain extender, a crosslinking agent, a light stabilizer, an antioxidant, a filler, etc., as needed.

For example, the polymerizable composition may further include a polymerization initiator, an internal release agent, and a UV absorber.

As the polymerization initiator, amine-based, phosphorus-based, organotin-based, organocopper-based, organogallium, organozirconium, organoiron-based, organozinc, organoaluminum, etc. may be used. The polymerization initiator may be included in an amount of 0.001 part by weight to 0.1 part by weight, based on 100 parts by weight of the polymerizable composition.

As the internal release agent, a component selected from a fluorine-based nonionic surfactant having a perfluoroalkyl group, a hydroxyalkyl group, or a phosphate ester group; a silicone-based nonionic surfactant having a dimethylpolysiloxane group, a hydroxyalkyl group, or a phosphate ester group; an alkyl quaternary ammonium salt, i.e., trimethylcetylammonium salt, trimethylstearyl, dimethylethylcetylammonium salt, triethyldodecylammonium salt, trioctylmethylammonium salt, and diethylcyclohexadodecylammonium salt; and a phosphate ester-based compound such as acidic phosphate ester, etc. may be used alone or in combination of two or more thereof. Preferably, a phosphate ester-based compound may be used. The internal release agent may be used in an amount of 0.01 part by weight to 1 part by weight, based on 100 parts by weight of the polymerizable composition.

The UV absorber may include, for example, benzotriazole compounds (specifically, Tinuvin 571, Tinuvin 213, Tinuvin 234, and Tinuvin P (hereinabove, manufactured by BASF)), formamidine compounds (specifically, Zikasorb R, Zikasorb BS, ZIKA-FA02, ZIKA-FUA, ZIKA-FUV, ZIKA-UVS3, ZIKA-UVS4 (hereinabove, manufactured by ZIKO)), and Biosorb 583 (manufactured by SAKAI CHEMICAL INDUSTRY CO., LTD.). The UV absorber may be used in an amount of 0.01 part by weight to 1 part by weight, based on 100 parts by weight of the polymerizable composition.

An optical material including a polymer in which the polymerizable composition including the above-described isocyanate composition of the present invention is polymerized exhibits high transparency and improved impact resistance. Accordingly, the optical material may be usefully used as a lens of eyeglasses, a camera lens, an adhesive requiring transparency, a resin, etc.

Hereinafter, preferred embodiments will be provided for better understanding of the present invention. However, it will be apparent to those skilled in the art that the following embodiments are only for illustrating the present invention, and various changes and modifications may be made therein without departing from the spirit and scope of the present disclosure. It is to be understood that such changes and modifications fall within metes and bounds of the accompanying claims.

### <Examples>

### Example 1

### (1) Preparation of compound 1-1-a

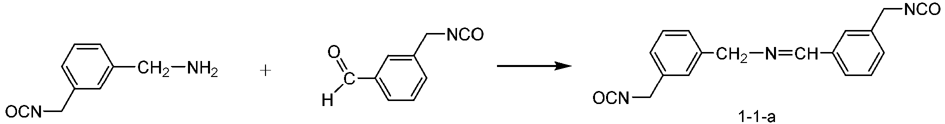

3-(isocyanatomethyl)benzylamine 324.4 mg (2.0 mmol) and 3-(isocyanatomethyl)benzaldehyde 322.4 mg (2.0 mmol) were added to 10 ml of anhydrous methylene chloride solvent and stirred for 15 minutes. Then, 710.2 mg (5 mmol) of Na₂SO₄ was added and stirred at room temperature for 4 hours. After completion of the reaction, Na₂SO₄ was filtered off and the solvent was removed under reduced pressure. The compound 1-1-a thus obtained was confirmed through GC-MS analysis. (Molecular formula: C₁₈H₁₅N₃O₂ (305.34))

### (2) Preparation of xylylene diisocyanate composition

A xylylene diisocyanate composition was prepared by adding the compound 1-1-a to m-xylylene diisocyanate (TOKYO CHEMICAL INDUSTRY CO.LTD., purity >98.0%(GC)) so that the amount of the compound 1-1-a was 0.5 ppm with respect to the total mass of the composition.

### (3) Preparation of polymerizable composition

62.4 g of the prepared xylylene diisocyanate composition, 0.16 g of ZELEC^{™} UN (manufactured by Stepan) as an internal release agent, and 0.80 g of Tinuvin^{®} 329 (manufactured by BASF) as a UV absorber were mixed in a flask at room temperature with stirring for about 20 minutes.

0.024 g of dibutyltin dichloride was added to the mixture, followed by mixing with stirring for 10 minutes, and then 57.6 g of 2,3-bis(2-sulfanyl ethyl sulfanyl)propane-1-thiol as a polyfunctional thiol-based compound was added, degassed under 5 mbar condition, and stirred for 1 hour to prepare a polymerizable composition.

### (4) Manufacturing of optical lens

The polymerizable composition prepared above was filtered through a 1 µm PTFE filter, and then injected into a mold made of a glass mold and tape. This mold was injected into an oven, and a polymerization reaction was performed for 20 hours while slowly heating from 10°C to 120°C. After completing the polymerization, the mold was removed from the oven, and released to obtain a plastic optical lens. The obtained lens was annealed at 120°C for 6 hours.

### Example 2

A xylylene diisocyanate composition was prepared by adding the compound 1-1-a to m-xylylene diisocyanate (TOKYO CHEMICAL INDUSTRY CO.LTD., purity >98.0%(GC)) so that the amount of the compound 1-1-a was 30 ppm with respect to the total mass of the composition.

Subsequently, a polymerizable composition and an optical lens were prepared in the same manner as Example 1.

### Example 3

A xylylene diisocyanate composition was prepared by adding the compound 1-1-a to m-xylylene diisocyanate (TOKYO CHEMICAL INDUSTRY CO.LTD., purity >98.0%(GC)) so that the amount of the compound 1-1-a was 240 ppm with respect to the total mass of the composition.

Subsequently, a polymerizable composition and an optical lens were prepared in the same manner as Example 1.

### Example 4

A xylylene diisocyanate composition was prepared by adding the compound 1-1-a to m-xylylene diisocyanate (TOKYO CHEMICAL INDUSTRY CO.LTD., purity >98.0%(GC)) so that the amount of the compound 1-1-a was 500 ppm with respect to the total mass of the composition.

Subsequently, a polymerizable composition and an optical lens were prepared in the same manner as Example 1.

### Comparative Example 1

A xylylene diisocyanate composition was prepared by adding the compound 1-1-a to m-xylylene diisocyanate (TOKYO CHEMICAL INDUSTRY CO.LTD., purity >98.0%(GC)) so that the amount of the compound 1-1-a was 1100 ppm with respect to the total mass of the composition.

Subsequently, a polymerizable composition and an optical lens were prepared in the same manner as Example 1.

### Comparative Example 2

A xylylene diisocyanate composition was prepared by adding the compound 1-1-a to m-xylylene diisocyanate (TOKYO CHEMICAL INDUSTRY CO.LTD., purity >98.0%(GC)) so that the amount of the compound 1-1-a was 1500 ppm with respect to the total mass of the composition.

Subsequently, a polymerizable composition and an optical lens were prepared in the same manner as Example 1.

### Comparative Example 3

A polymerizable composition and an optical lens were prepared in the same manner as Example 1 using m-xylylene diisocyanate. (TOKYO CHEMICAL INDUSTRY CO.LTD., purity >98.0%(GC)) **<Experimental Example>**

### (1) Component analysis of isocyanate composition

The content of the compound of Chemical Formula 1 in the isocyanate composition was analyzed using gas chromatography (GC). The analysis conditions were as follows.
GC system: Agilent 7890A 5975C
Column: DB-17MS (30 m * 0.25 mm * 0.25 µm)
Carier gas: nitrogen (1.0 mL/min)
Sample injection volume: 1 µl
Inlet temperature: 250°C
Detector temperature: 280°C

Oven temperature: heated from 80°C to 160°C at a rate of 5°C/min, maintained for 8 minutes, then heated to 280°C at a rate of 20°C/min, maintained for 18 minutes, and then analyzed
Split ratio: Pulsed splitless method
Detection method: SIM (monitoring ion: m/z 146, 305)

### (2) Yellowness index (YI) and Haze of isocyanate composition

Yellowness Index (YI) and Haze (%) were measured for optical lenses manufactured with a thickness of 9.3 mm by a method described below. As the YI value and Haze value are lower, it is evaluated that the color and transparency of the lens are better.
Equipment: Ultrascan Pro, HunterLab
Light source: D65/10
Measurement standard: ASTM E313

### (3) Glass transition temperature (Tg) of optical lens

A glass transition temperature (Tg) was measured for the optical lens by a penetration method (load of 50 g, pin tip of 0.5 mmΦ, heating rate of 10°C/min) using a thermomechanical analyzer (TMA Q400, TA instruments).

### (4) Impact resistance of optical lens

350 g of a steel ball was dropped at 22°C from a height of 127 cm onto the front surface of a 2 mm-thick lens. The above experiment was performed on each of 30 lenses manufactured with the same composition. When no lens broke, the impact resistance was evaluated as excellent (O), when 1 to 2 lenses broke or cracked, the impact resistance was evaluated as moderate (△), and when 3 or more lenses broke, the impact resistance was evaluated as poor (X).

The experimental results are summarized in Table 1 below.

**[Table 1]**

| | Content of compound of Chemical Formula 1 (ppm) | YI | Haze (%) | Tg (°C) | Impact resistance |
|---|---|---|---|---|---|
| Example 1 | 0.5 | 5.00 | 0.2 | 101.4 | ○ |
| Example 2 | 30 | 5.07 | 0.3 | 101.6 | ○ |
| Example 3 | 240 | 5.11 | 0.4 | 102.1 | ○ |
| Example 4 | 500 | 5.12 | 0.4 | 103.2 | ○ |
| Comparative Example 1 | 1100 | 5.28 | 0.9 | 104.4 | ○ |
| Comparative Example 2 | 1500 | 5.36 | 1.5 | 104.7 | ○ |
| Comparative Example 3 | 0 | 5.00 | 0.3 | 100.9 | Δ |

Referring to Table 1, it was confirmed that the optical lenses manufactured using the isocyanate compositions of Examples 1 to 4, each including the compound represented by Chemical Formula 1 of which amount is 1000 ppm or less, have low yellowness index and high transparency; and have a high glass transition temperature and excellent impact resistance compared to Comparative Example 3 without the compound represented by Chemical Formula 1.

However, when the compound represented by Chemical Formula 1 exceeds 1000 ppm, the yellowness index and turbidity of the optical lens increases, as confirmed from Comparative Examples 1 to 2.

The above results confirmed that it is possible to provide an optical lens having excellent glass transition temperature and impact resistance while having low white turbidity and yellowing by using the isocyanate composition including the compound represented by Chemical Formula 1, of which content satisfies more than 0 ppm to 1000 ppm or less.

## Claims

1. A compound represented by the following Chemical Formula 1: 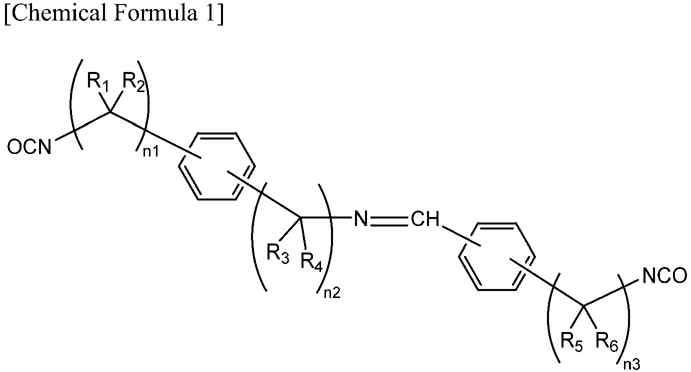
wherein in the Chemical Formula 1,
n1 to n3 are each independently an integer of 0 to 6,
R₁ to R₆ are each independently hydrogen, deuterium, tritium, or C₁₋₆ alkyl.

2. The compound of Claim 1,
wherein n1 to n3 are each independently an integer of 1 to 3.

3. The compound of Claim 1 or 2,
wherein R₁ to R₆ are all hydrogen.

4. The compound of Claim 1,
wherein the Chemical Formula 1 is represented by the following Chemical Formula 1-1:

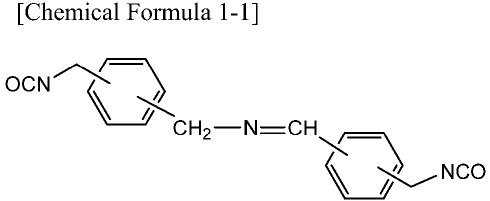

5. An isocyanate composition comprising xylylene diisocyanate and a compound represented by the following Chemical Formula 1, wherein the content of the compound represented by Chemical Formula 1 is more than 0 ppm to 1000 ppm or less:

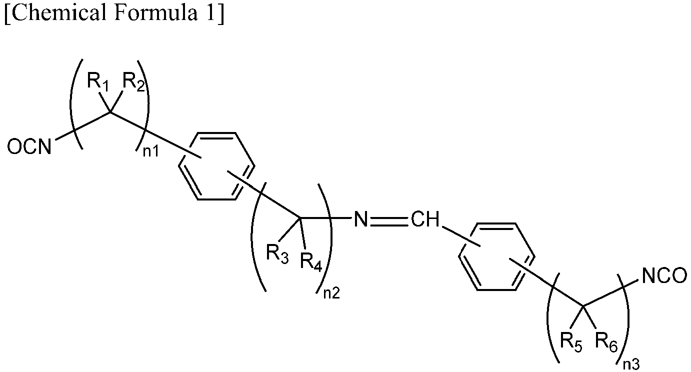

6. The isocyanate composition of claim 5, wherein the content of the compound represented by Chemical Formula 1 is 0.1 ppm to 1000 ppm.

7. The isocyanate composition of claim 5 or 6, further comprising one or more selected from the group consisting of chloromethyl benzyl isocyanate, isocyanomethyl benzaldehyde, and isocyanomethyl benznitrile.

8. A polymerizable composition comprising the isocyanate composition of any one of claims 5 to 7; and
polyol and/or polythiol component(s).

9. The polymerizable composition of claim 8, wherein the polyol and/or polythiol component(s) include(s) 2,3-bis(2-sulfanylethylsulfanyl)propane-1-thiol, 5,7-dimercaptomethyl-1,11-dimercapto-3,6,9-trithiaundecane, 4,7-dimercaptomethyl-1,11-dimercapto-3,6,9-trithiaundecane, or 4,8-dimercaptomethyl-1,11-dimercapto-3,6,9-trithiaundecane alone, or a mixture of two or more thereof.

10. The polymerizable composition of claim 8 or 9, further comprising a polymerization initiator, an internal release agent, and a UV absorber.

11. An optical material comprising a polymer obtained by polymerizing the polymerizable composition of any one of claims 8 to 10.
